# EUROPÄISCHE PATENTSCHRIFT

(11) **EP 3 199 370 B1**
(45) Veröffentlichungstag und Bekanntmachung des Hinweises auf die Patenterteilung: **09.01.2019**
(21) Anmeldenummer: 17000030.1
(22) Anmeldetag: 09.01.2017
(51) Int. Cl.: B42C 19/00

(54) **HERSTELLUNGSVERFAHREN UND ANLAGE ZUR ANWENDUNG DES HERSTELLUNGS-VERFAHRENS**
MANUFACTURING METHOD AND FACILITY FOR APPLICATION OF THE METHOD FOR MANUFACTURING
PROCÉDÉ DE FABRICATION ET INSTALLATION DESTINÉE À UTILISER LE PROCÉDÉ DE FABRICATION

(30) Priorität: 27.01.2016 DE 102016000821
(43) Veröffentlichungstag der Anmeldung: 02.08.2017
(73) Patentinhaber: Kolbus GmbH & Co. KG, 32369 Rahden (DE)
(72) Erfinder: Büntemeyer, Kai, 32369 Rahden (DE)

(56) Entgegenhaltungen:
- DE-A1- 10 344 577
- DE-A1-102008 033 184

## Beschreibung

Die vorliegende Erfindung betrifft ein Verfahren zur Herstellung bewegbarer Erzeugnisse gemäß dem Oberbegriff nach Anspruch 1 sowie eine Anlage gemäß dem Oberbegriff nach Anspruch 17.

Zur Herstellung bewegbarer Erzeugnisse werden den Substraten, aus welchen sie hergestellt werden, wie bspw. Halbzeuge Laufzettel beigefügt, welche die zur Herstellung erforderlichen Informationen enthalten. Meist enthalten solche Laufzettel eine Fertigteilzeichnung, einen Arbeitsplan sowie auftragsbezogene Daten wie den Fertigungstermin und die angeforderte Menge gleicher Erzeugnisse. Ein solcher Laufzettel begleitet das oder die Produkte während deren Herstellung und wird an den unterschiedlichen Bearbeitungsstationen als Grundlage für die Bearbeitung genutzt.

Bei komplexen Erzeugnissen, welche eine Vielzahl von Bearbeitungsschritten erfordern führt dies zu entsprechend häufigem Lesen und Interpretieren des Laufzettels durch Personal. Dies führt zu einem erheblichen Zeitaufwand und birgt zahlreiche Quellen für Lese- und Interpretationsfehler. Ein weiterer Nachteil besteht in der Gefahr, dass vor Fertigstellung des Erzeugnisses die Zuordnung zwischen Substrat bzw. Vorprodukt und Laufzettel verloren geht, was zumindest zu einem erheblichen zeitlichen Mehraufwand führt.

Diesen Umständen entgegenwirkend, ist es bekannt, Substrate oder Vorprodukte mit einem Kennzeichen zu versehen, welches meist als Strichcode aufgedruckt oder als einen Strichcode tragendes Etikett aufgeklebt wird. Mit Hilfe dieses Kennzeichens werden Informationen über das herzustellende Erzeugnis und den zugehörigen Fertigungsauftrag aus einer Datenbank abgerufen, indem das Kennzeichen die Bezeichnung des Datensatzes enthält. Dazu wird von der Produktionsplanung für jeden Fertigungsauftrag ein Datensatz in dieser Datenbank abgelegt. Häufig jedoch verteilt sich der Herstellungsprozess eines Produktes auf mehrere Fertigungsstätten und unterschiedliche Unternehmen. Dies erfordert eine entsprechende Anzahl, manuell zu füllender und zu pflegender Datenbanken mit jeweils einer unbegrenzt anwachsenden Anzahl von Datensätzen, was zu einem hohen Verwaltungsaufwand führt.

Dokument DE 10 2008 033 184 A1 offenbart ein Verfahren nach dem Oberbegriff des Anspruchs 1.

Es ist Aufgabe der vorliegenden Erfindung, ein Verfahren der eingangs genannten Art und eine Vorrichtung zu dessen Durchführung bereitzustellen, welche zumindest einige Nachteile der bekannten Systeme nicht aufweisen.

Die Erfindung löst die Aufgabe durch ein Verfahren mit den Merkmalen des Patentanspruchs 1 und durch eine Anlage mit den Merkmalen des Patentanspruchs 17. Vorteilhafte Weiterbildungen der Erfindung sind durch die in den Unteransprüchen angegebenen Merkmale gekennzeichnet.

Dazu sieht das Verfahren vor, die Werte der für die Herstellung des Erzeugnisses relevanten, das Erzeugnis beschreibenden Parameter zu bestimmen und zu einem Erzeugnisparametersatz zusammenzuführen. In einem weiteren Schritt wird durch eine geeignete Einrichtung der Erzeugnisparametersatz in eine Erzeugniscode überführt, mit welchem wenigstens ein für die Herstellung des Erzeugnis erforderliches Substrat gekennzeichnet wird. Dabei folgt das Generieren des Erzeugniscodes einer derart eindeutigen Vorschrift, dass identische Erzeugnisparametersätze zwangsweise in demselben Erzeugniscode abgebildet werden und aus dem Erzeugniscode durch invertierte Anwendung dieser Vorschrift, der dem Erzeugniscode zugrunde liegende Erzeugnisparametersatz ermittelt werden kann. Damit können die für den Herstellungsprozess erforderlichen Informationen über zu erzeugende Eigenschaften des aus diesem Substrat herzustellenden Erzeugnisses aus dem Erzeugniscode gewonnen werden.

Vor der weiteren Bearbeitung des Substrates wird das Kennzeichen eingelesen und aus den daraus gewonnenen Informationen Sollwertvorgaben für Stellgrößen der Einrichtung zur Bearbeitung des Substrates bestimmt. Die aus dem Kennzeichen gelesenen Informationen werden an eine Steuerung der das Substrat bearbeitenden Vorrichtung übermittelt und von dieser als Sollwertvorgaben für steuerbare Zustelleinrichtungen und steuerbare Antriebe der Vorrichtung zur Änderung der Stellgrößen und zur Bearbeitung des Substrates genutzt. Damit folgt die Bearbeitung des Substrates aus dem Kennzeichen gewonnenen Informationen, welche den eingangs gewonnenen, das herzustellende Erzeugnis beschreibenden Parameterwerten entsprechen.

Indem das zur Herstellung des Erzeugnisses zu bearbeitende Substrat selbst Träger der Produktbeschreibung ist, kann die Zuordnung von Substrat und Produktbeschreibung nur durch Zerstörung des Kennzeichens verloren gehen und die Eindeutigkeit der Übersetzungsvorschrift des Erzeugnisparametersatzes und damit der Produkteigenschaften in den Erzeugniscode und damit das Kennzeichen führt dazu, dass jederzeit und an beliebigem Ort aus einem beliebigen Kennzeichen die ursprüngliche Produktbeschreibung wiederhergestellt werden kann, sobald die Übersetzungsvorschrift bekannt ist und ohne dass darüber hinausgehende Informationen erforderlich sind. Die Rückgewinnung der produktionsrelevanten Erzeugnisbeschreibung ist unabhängig von der Spezifikation der Produktionsanlage oder des produzierenden Unternehmens, wodurch die Übertragung eines Herstellungsauftrages oder Teilauftrages deutlich vereinfacht wird.

Vorzugsweise dürfen die Erzeugnisparameter nur diskrete Werte annehmen, was zu einer endlichen Anzahl möglicher Erzeugnisparametersätze und damit zu einer endlichen Anzahl möglicher Erzeugniscodes führt. Abhängig von der Schrittweite zugelassener Werte kann einerseits die Größe des Erzeugniscodes auf ein erwünschtes Maß und andererseits die Anzahl möglicher Erzeugniscodes begrenzt werden. Der Ausschluss unsinniger Werte aus dem Zulässigkeitsbereich führt hier zu einer weiteren Eingrenzung.

In bevorzugter Ausübung besteht der Erzeugniscode aus der Anordnung einer Menge alphanumerischer Zeichen, da diese auf einfache Weise elektronisch verarbeitet werden können. Das Einlesen des Kennzeichens erfolgt vorzugsweise durch eine Leseeinrichtung der Produktionsanlage, welche das visuelle Lesen und manuelle Übertragen der Informationen durch Personal ersetzt und eine Automatisierung ermöglicht.

Die Automatisierung erstreckt sich vorteilhafter Weise von dem Lesen des Kennzeichens durch eine Leseeinrichtung der Produktionsanlage über das Erzeugen von Sollwertvorgaben aus den Informationen des Kennzeichens für das Anpassen von Stellgrößen der steuerbaren Antriebe und der steuerbaren Zustelleinrichtungen der das Substrat zu einem Erzeugnis verarbeitenden Bearbeitungsvorrichtung an das herzustellende Erzeugnis bis zu der Manipulation des Substrates durch die Bearbeitungsvorrichtung. Auch ist eine automatisierte Kontrolle durch Vergleich der erzeugten Merkmale mit dem aus dem Kennzeichen zurück gewonnenen Parameterwerten möglich.

In einer ersten Weiterbildung wird das Kennzeichen durch eine optische Markierung auf dem Substrat gebildet. Für das Lesen optischer Merkmale steht eine Vielzahl geeigneter sowie preiswerter Sensoren zur Verfügung. Darüber hinaus bietet eine optische Markierung die Möglichkeit, in Störungsfällen oder zu Kontrollzwecken auf die visuelle Erfassung zurückgreifen zu können.

In einer alternativen zweiten Weiterbildung, wird das Kennzeichen durch ein Funketikett gebildet. Das Funketikett kann auch an nicht oder eingeschränkt einsehbarer Stelle an dem Substrat angebracht sein und kann über die genannte Kennzeichnung hinaus weitere für die Produktion und/oder Nutzung des Erzeugnisses relevante Funktionen ausüben, wie bspw. eine Temperatur- oder Feuchtigkeitsüberwachung.

In vorteilhafter Ausführung besteht die Vorschrift für das Überführen eines Erzeugnisparametersatzes in einen Erzeugniscode in einer vorbestimmten Zuordnung des Codes zu dem Parametersatz. Diese Zuordnung ist in einer Datenbank hinterlegt, welche durch die bijektive Zuordnung in einfacher Weise auch für die Rückgewinnung des Erzeugnisparametersatzes aus dem Erzeugniscode genutzt werden kann. Vorzugsweise enthält diese Datenbank die Gesamtheit der Zuordnungen aller zulässiger Erzeugnisparametersätze, so dass ihre nachträgliche Erweiterung unnötig ist.

In einer alternativer Ausführung zu der Datenbank, wird die Vorschrift durch einen rechnerimplementierten Algorithmus gebildet, welcher die Zuordnungen erzeugt. Der für diesen Algorithmus erforderliche Speicherbedarf ist unabhängig von der Schrittweite und der Anzahl zulässiger Parameterwerte und bietet sich somit insbesondere für kleine bis hin zu infinitesimalen Schrittweiten und sehr großen Mengen zulässiger Werte an.

Insbesondere bei der gemeinsamen Bearbeitung mehrerer dasselbe Erzeugnis bildender Substrate ist es möglich, nur eines der Substrate mit dem aus dem Erzeugnisparametersatz abgeleiteten Kennzeichen versehen, wobei aus diesem einen Kennzeichen auch Sollwertvorgaben für weitere dasselbe Erzeugnis bildende Substrate abgeleitet werden. Auf diese Weise lässt sich der Aufwand für die Kennzeichnung und deren Auslesen reduzieren, insbesondere kann die Anzahl der erforderlichen Leseeinrichtungen gering gehalten werden.

Vorzugsweise ist die Steuerung der Bearbeitungsvorrichtung durch eine Einrichtung zur Datenfernübertragung mit einer Instanz verbunden, welche die Vorschrift für die Überführung des Erzeugnisparametersatzes in einen Erzeugniscode vorhält, wodurch der Zugriff mehrerer Bearbeitungsvorrichtungen auch unterschiedlicher Fertigungsstätten auf dieselbe Quelle der Überführungsvorschrift ermöglicht wird. So kann der Speicherbedarf insgesamt für die Vorschrift reduziert werden. Darüber hinaus können bei Bedarf Änderungen der Vorschrift auf diese Weise zentral erfolgen, und es ist sichergestellt, dass alle angeschlossenen Bearbeitungsvorrichtungen dieselbe Vorschrift mit demselben Änderungsstand anwenden.

Der Datenfluss erfolgt dabei durch die Übertragung elektrische Signale über Datenkabel. So kann der Datenfluss auf besonders einfache Weise erreicht werden und durch bekannte Maßnahmen gegen Störungen der Datenübertragung gesichert werden.

Alternativ erfolgt der Datenfluss durch die Übertragung elektromagnetischer Signale welche im sichtbaren Spektrum liegen und über optische Einrichtungen wie bspw. Lichtwellenleiter übertragen werden. Liegen sie im unsichtbaren Spektrum, können auch Funkverbindungen genutzt werden. Auf diese Weise können selbst große räumliche Entfernungen zwischen der Produktionsanlage und der die Vorschrift für die Überführung des Erzeugnisparametersatzes in einen Erzeugniscode vorhaltenden Einrichtung realisiert und damit die Anzahl der die Vorschrift für eine Vielzahl von Produktionsanlagen vorhaltenden Einrichtungen gering gehalten werden.

Darüber hinaus ist auch eine Kombination möglich, bei der die Informationen in Teilstrecken als elektrische Signale und in anderen Teilstrecken als elektromagnetische Signale übertragen werden.

In einer ersten Ausgestaltung umfasst die Einrichtung zur Datenfernübertragung eine gerichtete Verbindung zu einem die Vorschrift für die Überführung des Erzeugnisparametersatzes in einen Erzeugniscode vorhaltenden Rechenzentrum. So kann der Zeitbedarf für den Datenaustausch bei hoher Übertragungssicherheit gering gehalten werden.

In einer zweiten Ausgestaltung erfolgt die Datenfernübertragung ungerichtet zu einem die Vorschrift für die Überführung des Erzeugnisparametersatzes in einen Erzeugniscode vorhaltenden Internet-Server. Dadurch kann die vorhandene Infrastruktur des Internets genutzt und der Aufwand für die Datenübertragung gering gehalten werden.

In vorzugsweiser Weiterbildung ist der Erzeugniscode um auftragsbezogene Informationen wie bspw. der Anzahl zu fertigender Einheiten, Fertigungstermin und/oder Empfänger zu einem Auftragscode erweitert, welcher als Kennzeichen des Substrates genutzt wird. Auf diese Weise kann das Substrat sämtliche produktions- und auftragsrelevanten Informationen tragen, wodurch der Automatisierungsgrad der Erzeugnisherstellung weiter gesteigert werden kann.

Eine beispielhafte Ausführungsform des erfindungsgemäßen Verfahrens und der Anlage zur Anwendung des Verfahrens wird anhand der Figuren detailliert beschrieben. Es zeigen:
- **Fig. 1**: eine schematische Darstellung mehrerer Produktionsanlagen mit ihrer Datenvernetzung;
- **Fig. 2**: eine schematische Seitenansicht eines Buchdeckenautomaten;
- **Fig. 3**: einen schematischen Schnitt durch einen Buchdeckenautomaten in einer ersten Transportebene;
- **Fig. 4**: einen Ausschnitt eines schematischen Schnitts durch einen Buchdeckenautomaten in einer zweiten Transportebene;
- **Fig. 5**: ein Ablaufdiagramm eines Herstellungsverfahrens, ausgehend von Erzeugnisparametern;
- **Fig. 6**: ein Ablaufdiagramm eines Herstellungsverfahrens, ausgehend von Erzeugnisparametern und von auftragsbezogenen Informationen;

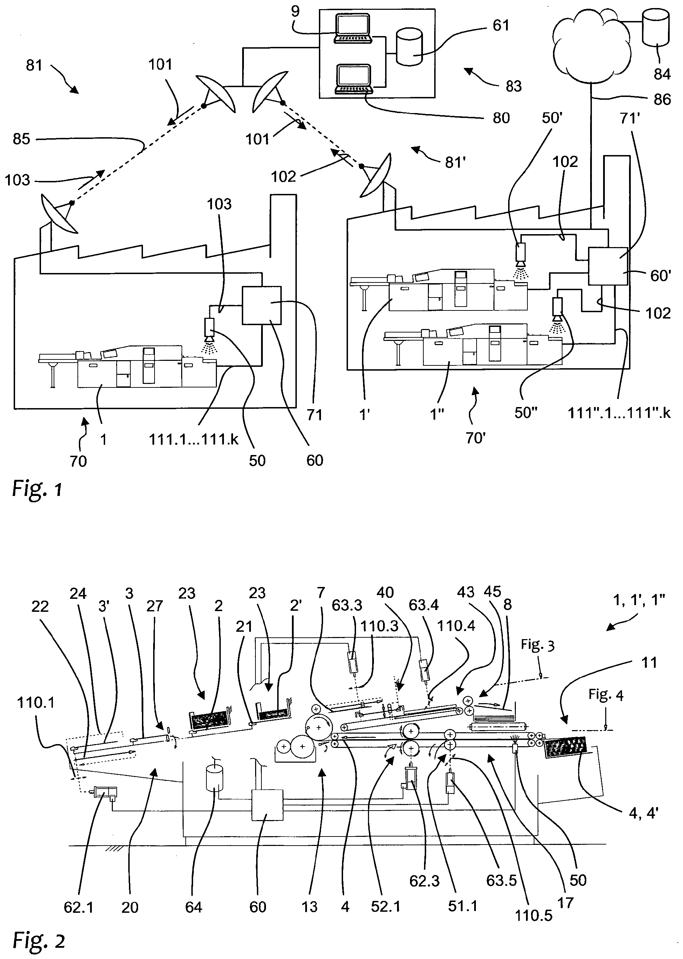

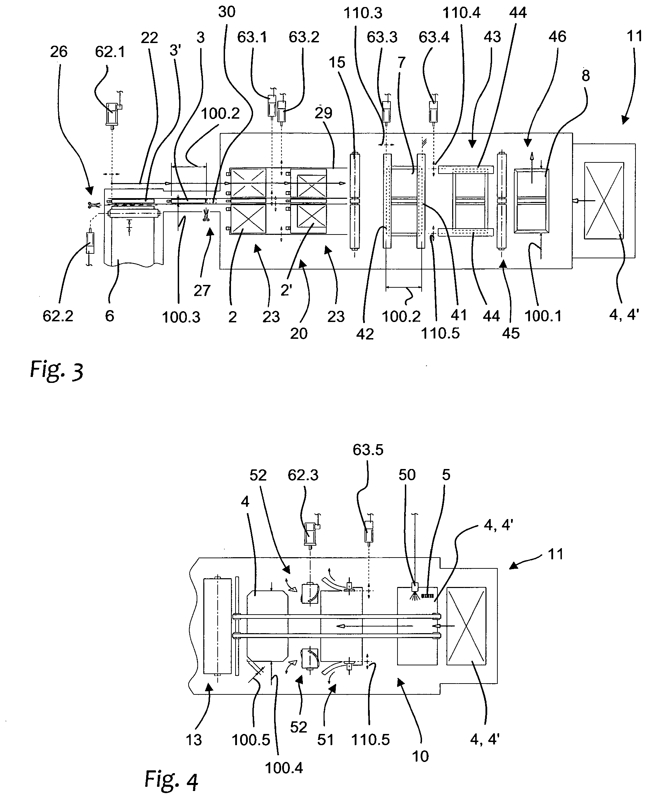

Figur 1 zeigt beispielhaft eine erste Produktionsanlagen 70 der Druckweiterverarbeitung, respektive Buchdeckenherstellung umfassend einen Buchdeckenautomaten 1. Die Produktionsanlage weist eine Steuerung 60 auf, welche an den Buchdeckenautomaten 1 Sollwertvorgaben 111.1 bis 111.k zur Anpassung dessen Stellgrößen 110.1 bis 110.m übermittelt. Eine Leseeinrichtung 50 der Produktionsanlage 70 erfasst den auf dem wie in Figur 4 gezeigt zuzuführenden Bezugsnutzen 4, 4' aufgebrachten Strichcode 5, welcher einen Auftragscode 103 abbildet. Die eine Kamera umfassende Leseeinrichtung 50 übermittelt den gelesenen Auftragscode 103 an die Steuerung 60, mit welcher sie verbunden ist.

Die Produktionsanlage 70 weist ferner eine Datenfernübertragungseinrichtung 81 auf, welche auf einer direkten Verbindung 85 den bidirektionalen Datenaustausch zwischen der Steuerung 60 und einem außerhalb der Produktionsanlagen 70 angeordneten Rechenzentrum 83 ermöglicht. Über die Datenfernübertragungseinrichtung 81 sendet die Produktionsanlage 70 den von der Leseeinrichtung 50 erfassten Auftragscode 103 an das Rechenzentrum 83, von welchem sie den diesem Auftragscode 103 zugrunde liegenden Erzeugnisparametersatz 101 erhält.

Dazu umfasst das Rechenzentrum 83 eine Datenbank 61, welche Datensätze zulässiger Erzeugnisparametersätze 101 und diesen zugeordneten Erzeugniscodes 102 und Auftragscodes 103 enthält. Außerdem weist das Rechenzentrum 83 eine Auftragsübersetzungseinrichtung 80 auf, welche unter Nutzung der Datenbank 61 aus dem empfangenen Auftragscode 103 den diesem zugrunde liegenden Erzeugnisparametersatz 101 ermittelt und diesen über die Datenfernübertragungseinrichtungen 81 der Produktionsanlage 70 zur Verfügung stellt. Darüber hinaus die Auftragsübersetzungseinrichtung 80 des Rechenzentrums 83 in der Lage, aus dem Auftragscode 103 Auftragsdaten zu erzeugen und ebenfalls der Produktionsanlage 70 zu übermitteln. Des weiteren weist das Rechenzentrum 83 eine Erzeugnisübersetzungseinrichtung 9 auf, welche vergleichbar der Auftragsübersetzungseinrichtung 80 aus einem zur Verfügung gestellten Erzeugniscode 102 den zugehörigen Erzeugnisparametersatz 101 zu ermitteln.

Um aus dem empfangenen Erzeugnisparametersatz 101 die zur Herstellung der Buchdecke 8 erforderlichen Sollwertvorgaben 111.1 bis 111.k für die steuerbaren Antriebe 62.1 bis 62.3 und steuerbaren Zustelleinrichtungen 63.1 bis 63.5 des Buchdeckenautomaten 1 zu gewinnen, beinhaltet die Steuerung 60 der Produktionsanlage 70 eine dem Buchdeckenautomaten 1 zugeordnete Produktionsübersetzungseinrichtung 71.

Eine ebenfalls in Figur 1 gezeigte zweite Produktionsanlage 70' umfasst zwei Buchdeckenautomaten 1' und 1", welche jeweils dem Buchdeckenautomaten 1 der erstgenannten Anlage 70 entsprechen. Jedem dieser Buchdeckenautomaten 1' und 1" der zweiten Anlage 70' ist eine Leseeinrichtung 50' bzw. 50" zugeordnet, welche einen Strichcode 5 des jeweils zuzuführenden Bezugsnutzen 4, 4' erfasst und der Steuerung 60' der zweiten Anlage 70' übermittelt. Ebenso wie die erste Produktionsanlage 70 umfasst auch die zweite Anlage 70' eine Datenfernübertragungseinrichtung 81' zur Übertragung des von den Leseeinrichtungen 50', 50" erfassten Codes 102 an dasselbe Rechenzentrum 83 zur Rückgewinnung des Erzeugnisparametersatzes 101.

Im Fall der zweiten Anlage 70' beinhalten die gelesenen Strichcodes 5 einen Erzeugniscode 102 anstelle eines Auftragscodes 103, wie dies bei der erstgenannten Produktionsanlage 70 der Fall ist. Dabei umfasst der Auftragscode 103 die im Erzeugniscode 102 enthaltenen Informationen über die herzustellenden Buchdecken 8 sowie darüber hinaus Informationen über Auftragsdaten wie bspw. Stückzahl, Termin und Auftraggeber. Über eine Steuerung 60' und Datenfernübertragungseinrichtung 81' der Produktionsanlage 70' wird der von deren Leseeinrichtungen 50', 50" erfasste Erzeugniscode 102 an das Rechenzentrum 83 übermittelt und von dort der zugrunde liegende Erzeugnisparametersatz 101 empfangen.

Darüber hinaus verfügt die zweite Produktionsanlage 70' über eine weitere Datenverbindung 86, über welche auf den über das Internet verfügbar gemachten Datenspeicher 84 zugegriffen werden kann. Wie die Datenbank 61 des Rechenzentrums 83 stellt der Datenspeicher 84 die erforderlichen Informationen bereit, mit deren Hilfe aus Erzeugniscodes 102 bzw. Auftragscodes 103 die zugehörigen Erzeugnisparametersätze 101 bestimmt werden können.

Anstelle einer Datenbank 61 kann durch das Rechenzentrum 83 und/oder den Datenspeicher 84 der die Übertragungsvorschrift beinhaltende Rechenalgorithmus 90 bereitgestellt werden. Dieser Algorithmus 90 wird von den Auftragsübersetzungseinrichtungen 80 bzw. den Erzeugnisübersetzungseinrichtungen 9 angewandt, um Erzeugnisparametersätze 101 einerseits und Erzeugniscodes 102 oder Auftragscodes 103 ineinander umzurechnen. Dazu umfasst die Steuerung 60' der Produktionsanlage 70' die Funktionalitäten der Übersetzungseinrichtungen 9, 80.

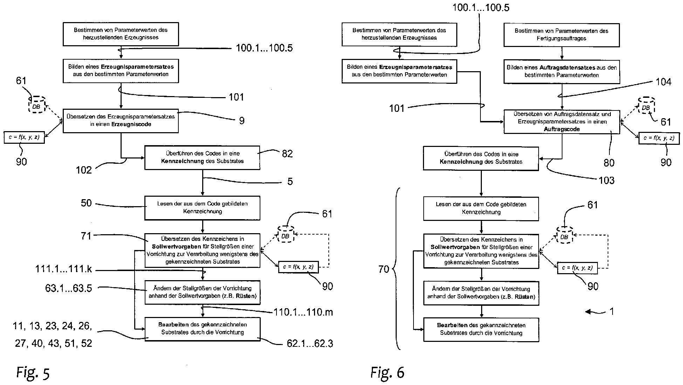

Die Datenflüsse der Produktionsanlagen 70, 70' sind in Figur 5 und in Figur 6 dargestellt. Beide Fälle beginnen mit dem Bestimmen der Parameterwerte 100.1 bis 100.5 der zu erzeugenden Buchdecke 8, welche zu einem Erzeugnisparametersatz 101 zusammengefasst werden. Bei dem in Figur 5 gezeigten Verfahren, erzeugt eine Erzeugnisübersetzungseinrichtung 9 unmittelbar aus dem Erzeugnisparametersatz 101 einen Erzeugniscode, indem sie den ihr zur Verfügung stehenden Algorithmus 90 anwendet. Alternativ nutzt die Erzeugnisübersetzungseinrichtung 9 eine gestrichelt dargestellte Datenbank 60, in welcher die bijektiven Zuordnungen zwischen Erzeugnisparametersätzen 101 und Erzeugniscodes 102 hinterlegt sind. Abweichend davon erzeugt in dem alternativen, in Figur 6 dargestellten Verfahren eine Auftragsübersetzungseinrichtung 80 aus dem Erzeugnisparametersatz 101 und einem aus zuvor bestimmten Parameterwerten des zugehörigen Fertigungsauftrages gewonnenen Auftragsdatensatz 104 einen Auftragscode 103.

In beiden Fällen wird der gewonnene Code 102, 103 in eine Kennzeichnung des Bezugsnutzen 4, 4' überführt, indem er durch eine Druckeinrichtung 82 als Strichcode 5 auf den Bezugsnutzen 4, 4' aufgebracht wird. Dieser Strichcode 5 wird jeweils von einer dem Buchdeckenautomaten 1, 1', 1" zugeordneten Leseeinrichtung 50, 50', 50" erfasst und die gelesenen Informationen zur Weiterverarbeitung an eine Datenverarbeitungseinrichtung 71 zur Erzeugung von Sollwertvorgaben 111.1 bis 111.k für die Zustelleinrichtungen 63.1 bis 63.5 und die steuerbaren Antriebe 62.1 bis 62.3 übermittelt. Dabei kann sich diese Datenverarbeitungseinrichtung 71 entsprechend Figur 1 aufteilen auf die Steuerung 60, 60' der Produktionsanlage 70, 70' und eine Erzeugnisübersetzungseinrichtung 9 bzw. Auftragsübersetzungseinrichtung 80, da neben den erzeugnisbezogenen Daten auch individuelle Eigenschaften der Produktionsanlage 70, 70' sowie deren Deckenautomaten 1, 1', 1" eingehen. Für die Überführung des gelesenen Strichcodes 5 in die Sollwertvorgaben 111.1 bis 111.k nutzt die Datenverarbeitungseinrichtung 71 damit wie anhand der Figur 1 erläutert eine Datenbank 61' oder einen in den Figuren 5 und 6 gezeigten Rechenalgorithmus 90 oder eine Kombination aus Rechenalgorithmus 90 und Datenbank 61

Die Sollwertvorgaben 111.1 bis 111.k werden von den Zustelleinrichtungen 63.1 bis 63.5 und den steuerbaren Antrieben 62.1 bis 62.3 des Deckenautomaten 1, 1', 1" zur Anpassung der Stellgrößen 110.1 bis 110.m oder unmittelbar für den Betrieb der Bearbeitungseinrichtungen 11, 13, 23, 24, 26, 27, 40, 43, 51, 52 genutzt.

Zur Erläuterung zeigen die Figuren 2 bis 4 eine Buchdeckenmaschine 1, 1', 1" der Produktionsanlagen 70 und 70', in der Buchdecken 8 durch Zusammenfügen von Deckelpappen 2 und Rückeneinlagen 3 auf Bezugsnutzen 4 hergestellt werden. Ein jeweiliger Bezugsnutzen 4 wird aus einem Nutzenmagazin 11 vereinzelt und von einem Klemmriemenförderer 17 einer Nutzenzuführung 10 einem Nutzenzylinder zugeführt, der den Bezugsnutzen 4 mit Greifern übernimmt, an einer Auftragswalze eines Leimwerks 13 vorbeiführt und im Fügepunkt an die beiden synchron zugeführten Deckelpappen 2 und der einen Rückeneinlage 3 anrollt.

Andrückrollen 15 drücken im Fügepunkt die Pappen 2, 3 auf den Bezugsnutzen 4, während ein hin- und herbewegter Saugbalken die montierte Buchdecke 7 von der aus Nutzenzylinder und Andrückrollen 15 gebildeten Anrolleinrichtung übernimmt, um sie einer Einschlag- und Andrückstation zuzuführen, bestehend aus einer Kopf-/Fußeinschlagstation 40 und einer Seiteneinschlagstation 43 zum Einschlagen der überstehenden Bezugsnutzenkanten sowie einem Presswalzenpaar 45 zum festen Anreiben der Pappenteile 2, 3 auf den Bezugsnutzen 4. In einer Auslage 46 werden die fertigen Buchdecken 8 gestapelt und zur manuellen Abnahme ausgegeben.

Die Deckelpappen 2 befinden sich in einem Pappenmagazin 23. Die jeweils untersten Deckelpappen werden von einem Pappenschieber 21 einer Pappenzuführung 20 ausgeschoben und zu einer Zwischenposition geführt, aus der sie von einem weiteren Pappenschieber 21 unter Ausrichtung an äußeren Pappenführungen 29 dem Fügepunkt zugeführt werden. Die Pappenschieber 21 sind in einem festen Abstand miteinander gekoppelt und werden mit einem konstanten Förderhub 22 gleich diesem Abstand taktgemäß vor und zurück bewegt.

Die Rückeneinlagen 3 werden in einem auf mittels des Strichcodes 5 wie oben beschrieben übermittelte Rückeneinlagebreite 100.3 einstellbaren Führungskanal 30 von den Pappenschiebern 21 vorgeschoben, wobei die Rückeneinlagen 3 hinter dem Pappenmagazin 23 in den durch das Pappenmagazin 23 hindurch verlängerten Führungskanal 30 eingebracht werden. Eine Rückeneinlagebahn 6 aus flexiblen Rollenschrenz wird von einer Schrenzzuführung 24 quer zur Pappenzuführungsrichtung in den Führungskanal 30 eingeschoben und mittels einer Schneideinrichtung 26 in Rückeneinlagebreite 100.3 von der Rückeneinlagebahn 6 abgetrennt und dabei gänzlich in den Führungskanal 30 überführt. Mit den gekoppelten Pappenschiebern 21 wird die abgetrennte Rückeneinlage 3 in eine Position innerhalb des Pappenmagazins 23 transportiert, von wo aus sie dann gemeinsam mit den Deckelpappen 2 mit dem dritten und vierten Förderhub 22 der Pappenschieber 21 bis zur Anrolleinrichtung weiter transportiert wird.

Die von der Rückeneinlagebahn 6 abgetrennte Rückeneinlage 3' kann etwas länger als die benötigte Rückeneinlagelänge sein. Die nach der Buchdeckenhöhe 100.2 bestimmte Rückeneinlagenlänge wird durch einseitiges Abtrennen eines Abfallstücks mittels einer am Führungskanal 30 angeordneten Schneideinrichtung 27 geschaffen.

Die Umstellung der Buchdeckenmaschine 1, 1', 1" zur Anpassung an geänderte Formate der zu fertigenden Buchdecke 8 erfolgt bei laufender Maschine mit noch in der Bearbeitung befindlichen Buchdecken 8. Eine jeweilige Verstellung wird durchgeführt, sobald die jeweilige Bearbeitung der vorangegangenen Buchdecke 7, 8 bzw. Buchdeckenteile 2, 3, 4 abgeschlossen ist, d.h. die notwendigen Verstellungen werden nicht gleichzeitig sondern sukzessiv mit dem Durchlauf der Buchdecken und Buchdeckenteile durchgeführt.

Die Verstellungen erfolgen motorisch durch Zustelleinrichtungen 63.1 bis 63.5 und werden von einer zentralen Steuerung 60 koordiniert. Es sind Verstellungen 110.4 hinsichtlich der aufgeschlagenen Breite 100.1 der Buchdecke 8 vorgesehen, indem mittels Zustelleinrichtungen 63.2 und 63.4 die äußeren Pappenführungen 29 bzw. die Seiteneinschlageinrichtungen 44 positioniert werden. Die Verstellung 110.4 berücksichtigt die Rückeneinlagebreite 100.3, wobei die Weite des Führungskanals 30 durch eine Zustelleinrichtung 63.1 verändert wird, während durch einen geänderten Vorschub eines mit dem Abzugswalzenpaar verbundenen steuerbaren Antrieb 62.2 eine jeweils erforderliche Rückeneinlagebreite 100.3 der Rückeneinlage 3 zugeführt wird. Die sich ändernde aufgeschlagene Breite 100.1 der Buchdecke 8 wird bezüglich der festen Nutzenbreite 100.4 der Bezugsnutzen 4 durch eine geänderte Einschlagbreite in der Seiteneinschlagstation 43 kompensiert.

Zur Herstellung von Buchdecken 8 in unterschiedlicher Höhe 100.2 und/oder aufgeschlagener Breite 100.1 werden in dem Ausführungsbeispiel unterschiedlich große Deckelpappen 2, 2' in zwei entlang der Pappenzuführung 20 angeordneten Pappenmagazinen 23 vorgehalten, wobei die Deckelpappen 2, 2' entsprechend der jeweils zu fertigen Buchdeckengröße wahlweise aus dem ersten oder dem zweiten Pappenmagazin 23von den Pappenschiebern 21 entnehmbar sind. Durch die Anordnung weiterer Pappenmagazine kann die Flexibilität und Varianz unterschiedlich große Buchdecken 8 bei laufender Produktion herzustellen, weiter erhöht werden. Eine unterbrechungsfreie Verarbeitung von unterschiedlich großen Deckelpappen 2, 2' ist aber auch möglich, indem die verschiedenen Deckelpappen 2, 2' in nur einem Pappenmagazin, bspw. in dem Pappenmagazin 23, in der Reihenfolge angelegt sind, wie sie verarbeitet werden.

In der dargestellten Buchdeckenmaschine 1, 1', 1" ist die vorlaufende Kante der Deckelpappen 2, 2' und Rückeneinlagen 3 als feste Bezugskante definiert, wie das aus den gestellfest angeordneten Vorderkantenanschlägen der Pappenmagazine 23 ersichtlich ist. Die Verarbeitung von unterschiedlich hohen Deckelpappen 2, 2' und Rückeneinlagen 3 erfordert daher eine Formatverstellung 110.1 der Hublage des konstanten Förderhubes 22, welche durch elektronische Verstellung eines als Antrieb der Pappenschieber 21 vorgesehenen Servomotors 62.1 realisiert ist. Die Buchdeckenhöhe 100.2 wird außerdem noch in der Kopf-/Fußeinschlagstation 40 eingestellt, wobei mittels einer Zustelleinrichtung 63.3 die Position 110.3 einer Fußeinschlageinrichtung 42 relativ zu einer gestellfest angeordneten Kopfeinschlageinrichtung 41 geändert wird.

Entlang der Nutzenzuführung 10 sind linke und rechte Eckenabstoßvorrichtungen 52 angeordnet, mit denen beim Durchlauf der Bezugsnutzen 4 Eckenabschnitte in einer Abstoßbreite 100.5 an der vor- und nachlaufende Kante abgetrennt werden. Die rotativen Werkzeuge der Eckenabstoßvorrichtungen 52 sind von einem Servomotor 62.2 angetrieben, der eine elektronische Verstellung der Abstoßbreite 100.5 entsprechend der jeweiligen Höhe 100.2 und aufgeschlagenen Breite 100.1 der Buchdecken 8 ermöglicht.

Darüber hinaus sind entlang der Nutzenzuführung 10 linke und rechte Seitenbeschnittvorrichtung 51 mit angetriebenen Rundmessern angeordnet, mit denen beim Durchlauf der Bezugsnutzen 4 seitliche Randabschnitte von breiteren Bezugsnutzen 4' abgetrennt werden. Zur Schaffung einer jeweils benötigten Nutzenbreite 100.4 ist eine Verstellung 110.5 vorgesehen, die mittels einer Zustelleinrichtung 63.5 die Rundmesserpaare der Seitenbeschnittvorrichtung 51 auf die betreffende Nutzenbreite 100.4 zueinander positioniert. Unterschiedliche große Bezugsnutzen 4 können dadurch aus zugeführten Standardgrößen von Bezugsnutzen 4' zugeschnitten werden.

## Patentansprüche

1. **Verfahren** zur Herstellung von bewegbaren Erzeugnissen (8) jeweils aus wenigstens einem Substrat (2, 2', 3, 3', 4, 4') wenigstens umfassend die Schritte
• Bestimmen von Parameterwerten (100.1 bis 100.5) des herzustellenden Erzeugnisses (8),
• Bilden eines Erzeugnisparametersatzes (101) aus den bestimmten Parameterwerten (100.1 bis 100.5),
• Überführen des Erzeugnisparametersatzes (101) in einen Erzeugniscode (102) durch eine Erzeugnisübersetzungseinrichtung (9),
• Überführen des Erzeugniscodes (102) in ein Kennzeichen (5), wobei wenigstens ein zur Herstellung des Erzeugnisses (8) erforderliches Substrat (2, 2', 3, 3', 4, 4') Träger dieses Kennzeichens (5) ist,
• Einlesen des Kennzeichens (5),
• Überführen des gelesenen Kennzeichens (5) in Sollwertvorgaben (111.1 bis 111.k) für Stellgrößen (110.1 bis 110.m) einer Vorrichtung (1, 1', 1") zur Herstellung des bewegbaren Erzeugnisses (8) aus dem wenigstens einen Substrat (2, 2', 3, 3', 4, 4'),
• Ändern von Stellgrößen (110.1 bis 110.m) der Vorrichtung (1, 1', 1") anhand der ermittelten Sollwertvorgaben (111.1 bis 111.k) durch Zustelleinrichtungen (63.1 bis 63.5) und/oder steuerbare Antriebe (62.1 bis 62.3) der Vorrichtung (1, 1', 1") und
• Bearbeiten des gekennzeichneten Substrates (2, 2', 3, 3', 4, 4') durch die Vorrichtung (1, 1', 1") anhand des eingelesenen Kennzeichens (5),
**dadurch gekennzeichnet, dass** wenigstens das Überführen des Erzeugnisparametersatzes (101) in einen Erzeugniscode (102) durch die Erzeugnisübersetzungseinrichtung (9) einer eindeutigen bijektiven Vorschrift folgt, derart dass identische Erzeugnisparametersätze (101) zwangsweise zu demselben Erzeugniscode (102) führen und dass aus jedem Erzeugniscode (102) der zugehörige Parametersatz (101) durch invertierte Anwendung derselben Vorschrift ermittelt werden kann.

2. Verfahren nach Anspruch 1, **dadurch gekennzeichnet, dass** der zulässige Wertebereich jedes den Erzeugnisparametersatz (101) bildenden Parameters (100.1 bis 100.5) jeweils ausschließlich eine endliche Anzahl diskreter Werte umfasst, und dass die beliebige Kombination zulässiger Werte zu einer endlichen Anzahl möglicher Erzeugnisparametersätzen (101) führt.

3. Verfahren nach Anspruch 1 oder 2, **dadurch gekennzeichnet, dass** der Erzeugniscode (102) ein alphanumerischer Code ist.

4. Verfahren nach einem der vorangehenden Ansprüche, **dadurch gekennzeichnet, dass** das Kennzeichen (5) durch eine Leseeinrichtung (50, 50', 50") erfasst wird, wobei die Leseeinrichtung (50, 50', 50") mit wenigstens einer Steuerung (60, 60') der Vorrichtung (1, 1', 1") direkt oder indirekt wirkverbunden ist.

5. Verfahren nach einem der vorangehenden Ansprüche, **dadurch gekennzeichnet, dass** das den Erzeugniscode abbildende Kennzeichen (5) von einer optisch erfassbare Markierung auf dem wenigstens einen Substrat (2, 2', 3, 3', 4, 4') gebildet wird.

6. Verfahren nach einem der Ansprüche 1 bis 4, **dadurch gekennzeichnet, dass** das den Erzeugniscode abbildende Kennzeichen (5) durch ein Funketikett gebildet wird, mit welchem das wenigstens eine Substrat (2, 2', 3, 3', 4, 4') versehen ist.

7. Verfahren nach einem der vorangehenden Ansprüche, **dadurch gekennzeichnet, dass** für die Verfahrensschritte Einlesen des Kennzeichens (5), Überführen des gelesenen Kennzeichens (5) in Sollwertvorgaben (111.1 bis 111.k) für Stellgrößen (110.1 bis 1110.m) einer Vorrichtung (1, 1', 1") zur Herstellung des bewegbaren Erzeugnisses (8) und Ändern von Stellgrößen (110.1 bis 110.m) durch Zustelleinrichtungen (63.1 bis 63. 5) und Einzelantriebe (62.1, 62.2, 62.3) der Vorrichtung (1, 1', 1") anhand der ermittelten Sollwertvorgaben (111.1 bis 111.k) automatisiert erfolgen.

8. Verfahren nach einem der vorangehenden Ansprüche, **gekennzeichnet durch** eine vorbestimmte bijektive Zuordnung jeweils eines Erzeugniscodes (102) zu einem Erzeugnisparametersatz (101).

9. Verfahren nach Anspruch 8, **dadurch gekennzeichnet, dass** die vorbestimmten bijektiven Zuordnungen von zulässigen Erzeugnisparametersätzen (101) einerseits und Erzeugniscodes (102) andererseits in einer Datenbank (61, 61') hinterlegt sind.

10. Verfahren nach einem der Ansprüche 1 bis 7, **dadurch gekennzeichnet, dass** das Überführen des Erzeugnisparametersatzes (101) in den Erzeugniscode (102) durch einen invertierbaren rechnerimplementierten Algorithmus (90) erfolgt.

11. Verfahren nach einem der vorangehenden Ansprüche, **dadurch gekennzeichnet, dass** jeweils ein Erzeugnis (8) aus mehreren Substraten (2, 2', 3, 3', 4, 4') hergestellt wird, wobei aus dem gelesenen Kennzeichen (5) eines der Substrate (2, 2', 3, 3', 4, 4') Informationen zur Bearbeitung anderer als der das Kennzeichen (5) tragenden Substrate (2, 2', 3, 3', 4, 4') desselben Erzeugnisses (8) gewonnen werden.

12. Verfahren nach einem der vorangehenden Ansprüche, **dadurch gekennzeichnet, dass** die Steuerung (60, 60') der Vorrichtung mittels einer Datenfernübertragungsvorrichtung (81, 81') auf die Datenbank (61, 61') oder den Algorithmus (90) zugreift.

13. Verfahren nach Anspruch 12, **gekennzeichnet durch** eine direkte Verbindung der Datenfernübertragungsvorrichtung (81, 81') mit einem die Datenbank (61, 61') und/oder den Algorithmus (90) speichernden Rechenzentrum (83).

14. Verfahren nach Anspruch 12, **gekennzeichnet durch** den Zugriff der Datenfernübertragungsvorrichtung (81, 81') auf einen Internet-Server (84) mit oder ohne privilegierter Zugriffsberechtigung, wobei der Internet-Server (84) die Datenbank (61, 61') und/oder den Algorithmus (90) vorhält.

15. Verfahren nach einem der vorangehenden Ansprüche, **dadurch gekennzeichnet, dass** das Kennzeichen (5) wenigstens eines der Substrate (2, 2', 3, 3', 4, 4') sowohl Informationen zur Identifikation des Erzeugniscodes (102) als auch Informationen über den zugehörigen Fertigungsauftrag enthält.

16. Verfahren zur Herstellung von Druckerzeugnissen (8) nach einem der vorangehenden Ansprüche.

17. **Anlage** zur Herstellung bewegbarer Erzeugnisse (8) jeweils aus wenigstens einem Substrat (2, 2', 3, 3', 4, 4') wenigstens aufweisend
• eine Maschine (1, 1', 1") mit einer Bearbeitungsvorrichtung (11, 13, 23, 24, 26, 27, 40, 43, 51, 52) zur Bearbeitung wenigstens eines der Substrate (2, 2', 3, 3', 4, 4'), umfassend
• wenigstens einen steuerbaren Antrieb (62.1 bis 62.3) und
• wenigstens eine Zustelleinrichtung, aufweisend wenigstens einen steuerbaren Stellantrieb (63.1 bis 63.5) zur Anpassung wenigstens einer Bearbeitungsvorrichtung (11, 13, 23, 24, 26, 27, 40, 43, 51, 52) an das durch diese zu bearbeitende Substrat (2, 2', 3, 3', 4, 4') und/oder an das herzustellende Erzeugnis (8),
• eine Steuerung (60, 60') der Anlage, wobei steuerbare Antriebe (62.1 bis 62.3) der Bearbeitungsvorrichtung (11, 13, 23, 24, 26, 27, 40, 43, 51, 52) und steuerbare Stellantriebe (63.1 bis 5) der Zustelleinrichtung mit der Steuerung (60, 60') wirkverbunden sind und
• eine mit der Steuerung (60, 60') der Anlage wirkverbundene Leseeinrichtung (50, 50', 50"),
**gekennzeichnet durch** eine Datenfernübertragungsvorrichtung (81, 81'), welche eine Zugriffsmöglichkeit auf einen Algorithmus (90) bildet, wobei der Algorithmus (90) geeignet ist, eine durch die Leseeinrichtung (50, 50', 50") erfasste und einen Erzeugniscode (102) beinhaltende Markierung (5) wenigstens eines zu bearbeitenden Substrates (2, 2', 3, 3', 4, 4') in Parameterwerte (100.1 bis 100.5) des herzustellenden Erzeugnisses (8) und/oder in Sollwertvorgaben (111.1 bis 111.k) für die steuerbaren Antriebe (62.1 bis 62.3) und für die steuerbaren Stellantriebe (63.1 bis 63.5) der Maschine (1, 1', 1") zu überführen, indem der Algorithmus (90) einer derart bijektiven Vorschrift folgt, dass identische Erzeugnisparametersätze (101) zwangsweise zu demselben Erzeugniscode (102) führen und dass aus jedem Erzeugniscode (102) der zugehörige Parametersatz (101) durch invertierte Anwendung derselben Vorschrift ermittelt werden kann.

18. Anlage nach Anspruch 17, **dadurch gekennzeichnet, dass** die Datenfernübertragungsvorrichtung (81, 81') geeignet ist, elektrische Signale zu senden und/oder zu empfangen.

19. Anlage nach Anspruch 17, **dadurch gekennzeichnet, dass** die Datenfernübertragungsvorrichtung (81, 81') geeignet ist, elektromagnetische Wellen zu senden und/oder zu empfangen, welche im sichtbaren und/oder im nicht sichtbaren Spektrum liegen.

20. Anlage nach einem der Ansprüche 17 bis 19, **gekennzeichnet durch** eine gerichtete, invariable Verbindung (85) der Datenfernübertragungsvorrichtung (81, 81') zu einem die Datenbank (60, 60') und/oder den Algorithmus (90) vorhaltenden Rechenzentrum (83).

21. Anlage nach einem der Ansprüche 17 bis 19, **gekennzeichnet durch** eine ungerichtete, variable Verbindung (86) der Datenfernübertragungsvorrichtung (81, 81') zu einem die Datenbank (60, 60') und/oder den Algorithmus (90) vorhaltenden Internet-Server (84).

## Claims

1. A **method** for respectively manufacturing movable products (8) of at least one substrate (2, 2', 3, 3', 4, 4'), comprising at least the steps of
• determining parameter values (100.1-100.5) of the product (8) to be manufactured,
• forming a product parameter set (101) of the determined parameter values (100.1-100.5),
• converting the product parameter set (101) into a product code (102) by means of a product translation device (9),
• converting the product code (102) into an identification (5), wherein this identification (5) is carried by at least one substrate (2, 2', 3, 3', 4, 4') required for the manufacture of the product (8),
• scanning the identification (5),
• converting the scanned identification (5) into setpoint settings (111.1-111.k) for manipulated variables (110.1-110.m) of a device (1, 1', 1") for manufacturing the movable product (8) of the at least one substrate (2, 2', 3, 3', 4, 4'),
• modifying manipulated variables (110.1-110.m) of the device (1, 1', 1") based on the determined setpoint settings (111.1-111.k) by means of adjusting mechanisms (63.1-63.5) and/or controllable drives (62.1-62.3) of the device (1, 1', 1"), and
• processing the identified substrate (2, 2', 3, 3', 4, 4') by means of the device (1, 1', 1") based on the scanned identification (5),
**characterized in that** at least the conversion of the product parameter set (101) into a product code (102) by means of the product translation device (9) follows an unambiguous bijective rule such that identical product parameter sets (101) inevitably lead to the same product code (102) and the corresponding parameter set (101) can be determined from each product code (102) by means of an inverted application of the same rule.

2. The method according to claim 1, **characterized in that** the permissible value range of each parameter (100.1-100.5) forming the product parameter set (101) respectively comprises only a finite number of discrete values, and **in that** the arbitrary combination of permissible values leads to a finite number of possible product parameter sets (101).

3. The method according to claim 1 or 2, **characterized in that** the product code (102) is an alphanumeric code.

4. The method according to one of the preceding claims, **characterized in that** the identification (5) is acquired by means of a scanning device (50, 50', 50"), wherein the scanning device (50, 50', 50") is functionally connected to at least one control (60, 60') of the device (1, 1', 1") directly or indirectly.

5. The method according to one of the preceding claims, **characterized in that** the identification (5) representing the product code is formed by an optically detectable marking on the at least one substrate (2, 2', 3, 3', 4, 4').

6. The method according to one of claims 1-4, **characterized in that** the identification (5) representing the product code is formed by a radio tag, with which the at least one substrate (2, 2', 3, 3', 4, 4') is provided.

7. The method according to one of the preceding claims, **characterized in that** the steps of scanning the identification (5), converting the scanned identification (5) into setpoint settings (111.1-111.k) for manipulated variables (110.1-110.m) of a device (1, 1', 1") for manufacturing the movable product (8) and modifying manipulated variables (110.1-110.m) by means of adjusting mechanisms (63.1-63.5) and/or individual drives (62.1, 62.2, 62.3) of the device (1, 1', 1") are carried out in an automated manner based on the determined setpoint settings (111.1-111.k).

8. The method according to one of the preceding claims, **characterized by** a predefined bijective allocation of one respective product code (102) to a product parameter set (101).

9. The method according to claim 8, **characterized in that** the predefined bijective allocations of permissible product parameter sets (101) on the one hand and product codes (102) on the other hand are stored in a database (61, 61').

10. The method according to one of claims 1-7, **characterized in that** the conversion of the product parameter set (101) into the product code (102) is carried out by means of an invertible computer-implemented algorithm (90).

11. The method according to one of the preceding claims, **characterized in that** one respective product (8) is manufactured of multiple substrates (2, 2', 3, 3', 4, 4'), wherein the scanned identification (5) of one of the substrates (2, 2', 3, 3', 4, 4') is used for obtaining information for processing substrates (2, 2', 3, 3', 4, 4') of the same product (8) other than the substrate carrying the identification (5).

12. The method according to one of the preceding claims, **characterized in that** the control (60, 60') of the device accesses the database (61, 61') or the algorithm (90) by means of a remote data transmission device (81, 81').

13. The method according to claim 12, **characterized by** a direct connection of the remote data transmission device (81, 81') to a computer center (83) that stores the database (61, 61') and/or the algorithm (90).

14. The method according to claim 12, **characterized by** the access of the remote data transmission device (81, 81') to an Internet server (84) with or without privileged access authorization, wherein the Internet server (84) makes available the database (61, 61') and/or the algorithm (90).

15. The method according to one of the preceding claims, **characterized in that** the identification (5) of at least one of the substrates (2, 2', 3, 3', 4, 4') contains information for identifying the product code (102), as well as information on the associated production order.

16. A method for manufacturing printed products (8) according to one of the preceding claims.

17. A **system** for respectively manufacturing movable products (8) of at least one substrate (2, 2', 3, 3', 4, 4'), comprising at least
• a machine (1, 1', 1") with a processing device (11, 13, 23, 24, 26, 27, 40, 43, 51, 52) for processing at least one of the substrates (2, 2', 3, 3', 4, 4'), with said machine comprising
• at least one controllable drive (62.1-62.3) and
• at least one adjusting mechanism with at least one controllable actuating drive (63.1-63.5) for adapting at least one processing device (11, 13, 23, 24, 26, 27, 40, 43, 51, 52) to the substrate (2, 2', 3, 3', 4, 4') to be processed thereby and/or to the product (8) to be manufactured,
• a system control (60, 60'), wherein controllable drives (62.1-62.3) of the processing device (11, 13, 23, 24, 26, 27, 40, 43, 51, 52) and controllable actuating drives (63.1-5) of the adjusting mechanism are functionally connected to the control (60, 60'), and
• a scanning device (50, 50', 50") that is functionally connected to the system control (60, 60'),
**characterized by** a remote data transmission device (81, 81') that makes it possible to access an algorithm (90), wherein the algorithm (90) is suitable for converting a marking (5) of at least one substrate (2, 2', 3, 3', 4, 4') to be processed, which is acquired by means of the scanning device (50, 50', 50") and contains a product code (102), into parameter values (100.1-100.5) of the product (8) to be manufactured and/or into setpoint settings (111.1-111.k) for the controllable drives (62.1-62.3) and for the controllable actuating drives (63.1-63.5) of the machine (1, 1', 1"), namely in that the algorithm (90) follows such a bijective rule that identical product parameter sets (101) inevitably lead to the same product code (102) and the corresponding parameter set (101) can be determined from each product code (102) by means of an inverted application of the same rule.

18. The system according to claim 17, **characterized in that** the remote data transmission device (81, 81') is suitable for transmitting and/or for receiving electrical signals.

19. The system according to claim 17, **characterized in that** the remote data transmission device (81, 81') is suitable for transmitting and/or for receiving electromagnetic waves, which lie in the visible and/or in the invisible spectrum.

20. The system according to one of claims 17-19, **characterized by** a directional, invariable connection (85) of the remote data transmission device (81, 81') to a computer center (83) that makes available the database (60, 60') and/or the algorithm (90).

21. The system according to one of claims 17-19, **characterized by** an undirectional, variable connection (86) of the remote data transmission device (81, 81') to an Internet server (84) that makes available the database (60, 60') and/or the algorithm (90).

## Revendications

1. **Procédé**, destiné à la fabrication de produits mobiles (8), chacun en au moins un substrat (2, 2', 3, 3', 4, 4') comprenant au moins les étapes consistant à
• déterminer des valeurs de paramètres (100.1 à 100.5) du produit (8) qui doit être fabriqué,
• créer un jeu de paramètres de produits (101) à partir des valeurs de paramètres (100.1 à 100.5) déterminées,
• transformer le jeu de paramètres de produits (101) en un code produit (102) à l'aide d'un système de conversion de produits (9),
• transformer le code produit (102) en un identifiant (5), au moins un substrat (2, 2', 3, 3', 4, 4') requis pour la fabrication du produit (8) étant porteur dudit identifiant (5),
• lire l'identifiant (5),
• transformer l'identifiant (5) lu en valeurs de consignes prescrites (111.1 à 111.k) pour des grandeurs de réglage (110.1 à 110.m) d'un dispositif (1, 1', 1") pour la fabrication du produit mobile (8) à partir de l'au moins un substrat (2, 2', 3, 3', 4, 4'),
• modifier des grandeurs de réglage (110.1 à 110.m) du dispositif (1, 1', 1") à l'aide des valeurs de consignes prescrites (111.1 à 111.k) déterminées par des systèmes d'amenage (63.1 à 63.5) et/ou des entraînements susceptibles d'être commandés (62.1 à 62.3) du dispositif (1, 1', 1") et
• usiner le substrat (2, 2', 3, 3', 4, 4') identifié par le dispositif (1, 1', 1") à l'aide de l'identifiant (5) lu,
**caractérisé en ce qu'**au moins la transformation du jeu de paramètres de produits (101) dans un code produit (102) par le système de conversion de produits (9) suit une prescription univoque, de telle manière que des jeux de paramètres de produits (101) identiques mènent obligatoirement vers le même code produit (102) et qu'à partir de chaque code produit (102), le jeu de paramètres (101) associé puisse être déterminé par application inversée de la même prescription.

2. Procédé selon la revendication 1, **caractérisé en ce que** la plage de valeurs autorisées pour chaque paramètre (100.1 à 100.5) formant le jeu de paramètres de produits (101) comprend chaque fois exclusivement un nombre final de valeurs discrètes et **en ce que** la combinaison quelconque de valeurs autorisées mène à un nombre final de jeux de paramètres de produits (101) possibles.

3. Procédé selon la revendication 1 ou 2, **caractérisé en ce que** le code produit (102) est un code alphanumérique.

4. Procédé selon l'une quelconque des revendications précédentes, **caractérisé en ce que** l'identifiant (5) est détecté par un lecteur (50, 50', 50"), le lecteur (50, 50', 50") étant en connexion fonctionnelle directe ou indirecte avec au moins un système de commande (60, 60') du dispositif (1, 1', 1").

5. Procédé selon l'une quelconque des revendications précédentes, **caractérisé en ce que** l'identifiant (5) qui reproduit le code produit est formé par un marquage optiquement détectable sur l'au moins un substrat (2, 2', 3, 3', 4, 4').

6. Procédé selon l'une quelconque des revendications 1 à 4, **caractérisé en ce que** l'identifiant (5) qui reproduit le code produit est formé par une étiquette à radiofréquence, qui munit l'au moins un substrat (2, 2', 3, 3', 4, 4').

7. Procédé selon l'une quelconque des revendications précédentes, **caractérisé en ce que** les étapes de procédé consistant à lire l'identifiant (5), à transformer l'identifiant (5) en valeurs de consignes prescrites (111.1 à 111.k) pour des grandeurs de réglage (110.1 à 1110.m) d'un dispositif (1, 1', 1") pour la fabrication du produit mobile (8) et à modifier des grandeurs de réglage (110.1 à 110.m) par des systèmes d'amenage (63.1 à 63. 5) et des entraînements individuels (62.1, 62.2, 62.3) du dispositif (1, 1', 1") à l'aide des valeurs de consignes prescrites (111.1 à 111.k) déterminées s'effectuent de manière automatisée.

8. Procédé selon l'une quelconque des revendications précédentes, **caractérisé par** une affectation bijective prédéterminée chaque fois d'un code produit (102) à un jeu de paramètres de produits (101).

9. Procédé selon la revendication 8, **caractérisé en ce que** les affectations bijectives prédéfinies de jeux de paramètres de produits (101) autorisés d'une part et de code produit (102) d'autre part sont sauvegardées dans une base de données (61, 61').

10. Procédé selon l'une quelconque des revendications 1 à 7, **caractérisé en ce que** la transformation des jeux de paramètres de produits (101) dans le code produit (102) s'effectue à l'aide d'un algorithme (90) inversible mis en oeuvre par ordinateur.

11. Procédé selon l'une quelconque des revendications précédentes, **caractérisé en ce qu'**on fabrique chaque fois un produit (8) à partir de plusieurs substrats (2, 2', 3, 3', 4, 4'), à partir de l'identifiant (5) lu de l'un des substrats (2, 2', 3, 3', 4, 4'), des informations étant acquises pour l'usinage d'autres substrats (2, 2', 3, 3', 4, 4') que ceux qui portent l'identifiant (5) du même produit (8).

12. Procédé selon l'une quelconque des revendications précédentes, **caractérisé en ce que** le système de commande (60, 60') du dispositif accède à la base de données (61, 61') ou à l'algorithme (90) au moyen d'un dispositif de transfert de données (81, 81').

13. Procédé selon la revendication 12, **caractérisé par** une connexion directe du dispositif de transfert de données (81, 81') avec un centre informatique (83) mémorisant la base de données (61, 61') et/ou l'algorithme (90).

14. Procédé selon la revendication 12, **caractérisé par** l'accès du dispositif de transfert de données (81, 81') à un serveur Internet (84) avec ou sans autorisation d'accès privilégiée, le serveur Internet (84) mettant à disposition la base de données (61, 61') et/ou l'algorithme (90).

15. Procédé selon l'une quelconque des revendications précédentes, **caractérisé en ce que** l'identifiant (5) d'au moins l'un des substrats (2, 2', 3, 3', 4, 4') contient aussi bien des informations sur l'identification du code produit (102) qu'également des informations sur l'ordre de fabrication associé.

16. Procédé destiné à la fabrication de produits d'impression (8) selon l'une quelconque des revendications précédentes.

17. **Installation**, destinée à la fabrication de produits mobiles (8) chacun en au moins un substrat (2, 2', 3, 3', 4, 4'), comportant au moins
• une machine (1, 1', 1") équipée d'un dispositif d'usinage (11, 13, 23, 24, 26, 27, 40, 43, 51, 52) destiné à usiner au moins l'un des substrats (2, 2', 3, 3', 4, 4'), comprenant
• au moins un entraînement (62.1 à 62.3) susceptible d'être commandé et
• au moins au système d'amenage, comportant au moins un actionneur (63.1 à 63.5) susceptible d'être commandé, pour l'adaptation d'au moins un dispositif d'usinage (11, 13, 23, 24, 26, 27, 40, 43, 51, 52) au substrat (2, 2', 3, 3', 4, 4') qu'il doit usiner et/ou au produit (8) qui doit être fabriqué,
• un système de commande (60, 60') de l'installation, des entraînements (62.1 à 62.3) susceptibles d'être commandés du dispositif d'usinage (11, 13, 23, 24, 26, 27, 40, 43, 51, 52) et des actionneurs (63.1 à 5) susceptibles d'être commandés du système d'amenage étant en connexion active avec le système de commande (60, 60') et
• un lecteur (50, 50', 50") qui est en connexion active avec le système de commande (60, 60') de l'installation,
**caractérisée par** un dispositif de transfert de données (81, 81'), lequel créé une possibilité d'accès à un algorithme (90), l'algorithme (90) étant apte à transformer un marquage (5) détecté par le lecteur (50, 50', 50") et contenant un code produit (102) d'au moins un substrat (2, 2', 3, 3', 4, 4') à usiner en des valeurs de paramètres (100.1 à 100.5) du produit (8) à fabriquer et/ou en des valeurs de consignes prescrites (111.1 à 111.k) pour les entraînements (62.1 à 62.3) susceptibles d'être commandés et pour les actionneurs (63.1 à 63.5) susceptibles d'être commandés de la machine (1, 1', 1"), en ce que l'algorithme (90) suit une prescription bijective de telle sorte que des jeux de paramètres de produits (101) identiques mènent obligatoirement vers le même code produit (102) et en ce qu'à partir de chaque code produit (102), le jeu de paramètres (101) associé puisse être déterminé par application inversée de la même prescription.

18. Installation selon la revendication 17, **caractérisée en ce que** le dispositif de transfert de données (81, 81') est apte à envoyer et/ou à réceptionner des signaux électriques.

19. Installation selon la revendication 17, **caractérisée en ce que** le dispositif de transfert de données (81, 81') est apte à envoyer et/ou à réceptionner des ondes électromagnétiques qui se situent dans le spectre visible et/ou non visible.

20. Installation selon l'une quelconque des revendications 17 à 19, **caractérisée par** une connexion (85) directionnelle, invariable du dispositif de transfert de données (81, 81') vers un centre informatique (83) mettant à disposition la base de données (60, 60') et/ou l'algorithme (90).

21. Installation selon l'une quelconque des revendications 17 à 19, **caractérisée par** une connexion (86) omnidirectionnelle variable du dispositif de transfert de données (81, 81') vers un serveur Internet (84) mettant à disposition la base de données (60, 60') et/ou l'algorithme (90).
